# EUROPEAN PATENT SPECIFICATION

(11) **EP 1 767 453 B1**
(45) Date of publication and mention of the grant of the patent: **18.06.2008**
(21) Application number: 06121033.2
(22) Date of filing: 21.09.2006
(51) Int. Cl.: B64C 39/02, B64F 1/04, A63H 27/14

(54) **Autonomous launch pad for micro air vehicles**
Autonome Startrampe für Mikroflugzeuge
Plateforme de lancement autonome pour micro véhicule aérien

(30) Priority: 26.09.2005 US 235057
(43) Date of publication of application: 28.03.2007
(73) Proprietor: Honeywell International Inc., Morristown, New Jersey 07962 (US)
(72) Inventor: Horak, Dan T., Ellicott City, Maryland 21042 (US)
(74) Representative: Haley, Stephen

(56) References cited:
- US-A- 5 052 653
- MULLENS K ET AL.: "Automated Launch, Recovery, and Refueling for Small Unmanned Aerial Vehicles" MOBILE ROBOTS XVII, PROCEEDINGS OF SPIE, [Online] vol. 5609, December 2004 (2004-12), pages 233-243, XP002415574 Bellingham, WA, USA Retrieved from the Internet: URL:http://spiedl.aip.org/getpdf/servlet/G etPDFServlet?filetype=pdf&id=PSISDG0056090 00001000233000001&idtype=cvips&prog=normal > [retrieved on 2007-01-18]
- BENJAMIN N ELSON: "Mini-RPV being Developed for Army" AVIATION WEEK AND SPACE TECHNOLOGY, MCGRAW-HILL COMPAGNY, NEW YORK, NY, US, vol. 112, no. 4, 7 January 1980 (1980-01-07), pages 54-63, XP002160708 ISSN: 0005-2175

## Description

The present invention relates generally to air vehicles and in particular to micro air vehicles surveillance systems.

The use of micro air vehicles (MAV) in battlefield situations has become more common place. An example of a MAV is a ducted fan vertical takeoff and landing (VTOL) aircraft that is powered by an internal combustion engine. MAV's are generally used to gather video and other surveillance information that can be used by ground troops. With relatively small MAV's, their lifting capacity is limited. In taking this limitation into consideration, current MAV's are designed without engine starters and starting batteries to keep the weight down. To start a MAV, a human operator must start the engine manually with a pull cord. Accordingly, a human operator must be present when a MAV is started. Moreover, because of the weight issue, even if a MAV was designed with a built in starter, the amount of fuel used to operate the MAV would have to be reduced to accommodate the starter, thereby limiting the flight time and range.

For the reasons stated above and for other reasons stated below which will become apparent to those skilled in the art upon reading and understanding the present specification, there is a need in the art for an improved MAV surveillance system and method of starting a MAV.

The above-mentioned problems of current systems are addressed by embodiments of the present invention and will be understood by reading and studying the following specification.

An autonomous launch pad is provided. The launch pad includes a launching surface, a battery and a starter. The launching surface is adapted to support a ducted fan vertical takeoff and landing (VTOL) micro air vehicle (MAV). The battery is housed in the launch pad. The starter is also housed in the launch pad. Moreover, the battery is adapted to selectively provide power to operate the starter. The starter is adapted to start an engine of the MAV upon a remote launch signal command that directs power from the battery to be coupled to the starter. Accordingly, the MAV can be commanded to be launched from a location that is remote from the launch pad via the remote launch signal command.

The present invention can be more easily understood and further advantages and uses thereof more readily apparent when considered in view of the description of the preferred embodiments and the following figures in which:
Figure 1 is an illustration of a micro air vehicle on a launch pad of a micro air vehicle system of one embodiment of the present invention;
Figure 2 is an illustration of micro air vehicle being launched from a launch pad of a micro air vehicle system of one embodiment of the present invention;
Figure 3 is an illustration of a micro air vehicle of one embodiment of the present invention;
Figure 4 is an illustration of a micro air vehicle system of another embodiment of the present invention;
Figure 5 is a flow chart illustrating the operations of a MAV system of one embodiment of the present invention; and
Figure 6 is a block diagram illustrating the process to automatically land a MAV on a landing pad of one embodiment of the present invention.

In accordance with common practice, the various described features are not drawn to scale but are drawn to emphasize specific features relevant to the present invention. Reference characters denote like elements throughout Figures and text.

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense, and the scope of the present invention is defined only by the claims and equivalents thereof.

An autonomous launch pad is provided. The launch pad includes a starting mechanism which allows the MAV to be launched remotely without direct human contact

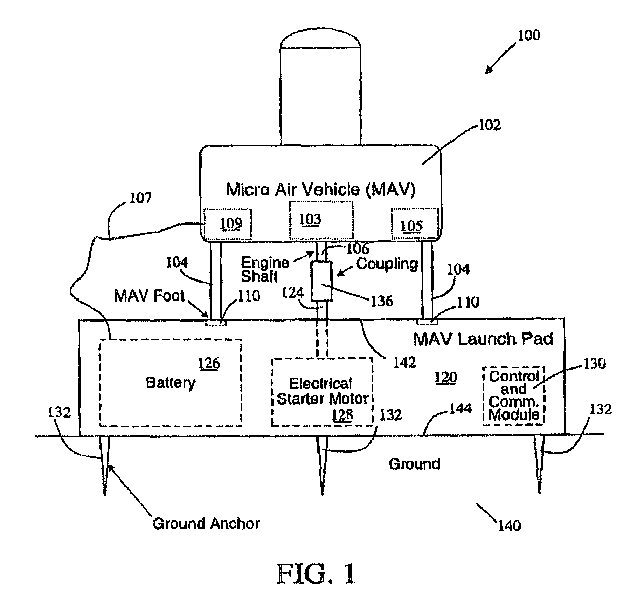

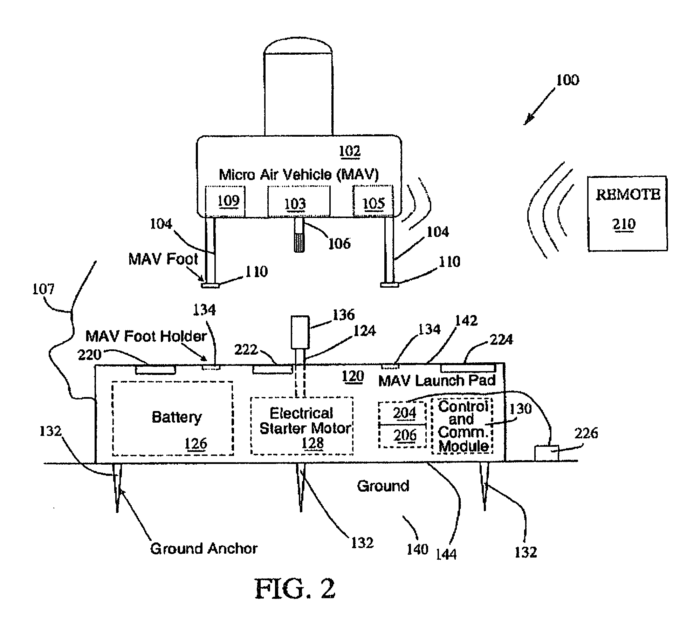

Referring to Figures 1 and 2, a MAV system 100 of one embodiment of the present invention is illustrated. Figure 2 is an illustration of the MAV 102 being launched from the MAV launch pad 120. The MAV system 100 includes MAV 102 and launch pad 120. In Figure 1, the MAV 102 is resting on launch pad 120. MAV 102 includes an engine starting shaft 106 that is used to start internal-combustion engine 103 that provides power to the MAV 102. MAV 102 also includes at least three stabilizing legs 104. Each stabilizing leg 104 is terminated with a foot 110 that rests in a foot holder 134 (which is illustrated in Figure 2) of the launch pad 120. The MAV 102 is further illustrated as having an MAV control unit 105 (or MAV controller). The MAV controller 105 controls an equipment on the MAV as well as provides communication functions. Accordingly, the MAV controller 105 includes a transmitter designed to transmit surveillance information gathered and a receiver designed to receive remote commands.

The launch pad 120 has a launching surface 142 upon which the MAV 100 is launched from and a ground engaging surface 144. As stated above, the launch pad 120 includes three or more foot holder 134. As illustrated in Figure 2, the foot holders 134 are recessed into the surface of the launching surface 142 in this embodiment. The foot holders 134 stabilize the MAV 102 when the MAV is resting on the MAV launch pad 120, In one embodiment, each foot holder 134 is designed to hold an associated MAV foot 110 until a starter 128 is activated. The launch pad 120 also includes ground anchors 132 that are coupled to the ground engaging surface 144 of the launch pad 120. The ground anchors 132 secure the launch pad 120 to the ground so the launch pad will not be affected by weaker (such as strong winds) or be moved during the launch of the MAV 102.

The launch pad 120 further includes an electrical starter motor 128 and a battery 126 coupled to power the starter motor 128. In one embodiment, the battery is also coupled to the MAV 102 via power cord 107. The power cord 107 provides a means to charge a smaller MAV power storage device 109 in the MAV 102 with the larger battery 126 in the launch pad 120. The power cord 107 is disconnected from the MAV 102 when the MAV lifts off of the launch pad 120 as is illustrated in Figure 2. Also included in the launch pad 120, is a launch control module 130 (or pad controller 130), The pad controller 130 controls the operation of the starter motor 128. In particular, the pad controller 130 selectively controls the connection of power from the battery 126 to the starter 128 to start engine 103 in the MAV 102, In one embodiment of the present invention, the pad controller 130 includes a receiver that is designed to receive a launch command from MAV controller 105 on the MAV 102. The launch signal from the MAV controller 105 instructs the pad controller 130 to connect power from the battery 126 to the starter motor. In another embodiment, the MAV controller 105 is in communication with the pad controller 130 via communication cord (not shown) which is disconnected at takeoff similar to power cord 107. In this embodiment, the launch command is communicated to the pad controller 130 via the communication cord. In embodiments of the present invention, the pad controller 130 maintains power to the starter 128 until the MAV controller 105 instructs it that engine 103 has started.

As also illustrated in Figure 2, a power shaft 124 extends from the starter motor 128 in the launch pad 120. When the starter motor 128 is provided power, the power shaft 124 rotates. This rotation starts engine 103 in the MAV 102. In particular, rotation of power shaft 124 is transferred to the engine starting shaft 106 with a coupler 136 that couples the two shafts rotationally, but provides longitudinal freedom. Accordingly, coupling systems of the present invention provide rotation transfer yet also allow for a longitudinal disengagement such that once the MAV 102 starts lifting off the launch pad 120, the coupling system becomes disengaged.

As stated above, embodiments of the present invention allow for the remote activation of an MAV 102. Therefore, the MAV 102 can be set up in a location remote to the ground troops and still be activated when needed without a human operator being present at the launch sight. As illustrated in Figure 2, a remote unit 210 is in communication with the MAV controller 105. The remote unit 210 signals the MAV control 105 to initiate a launch. In response to the launch signal, the MAV controller 105, which is in communication with the pad controller 130, directs the pad controller 130 to engage the starter motor 128. The MAV controller 105 is also designed to communicate surveillance information back to the remote unit 210 which may be a command center. Embodiments of the present invention are portable. In fact, the MAV 102 itself is relatively small and in one embodiment weighs around 15 lbs. The launch pad has a similar weight Moreover, in some embodiments of the present invention the launch pad 102 is designed to be foldable, Accordingly, a soldier can easily carry one of these systems in a special designed backpack on a MAV deployment mission.

As discussed above, because of the limited lift force a MAV can generate, MAV's are limited in the amount of payload they can take on a surveillance mission. A launch pad on the other hand does not have this limitation. Accordingly, other devices can be installed on the launch pads. For example, the launch pad 120 of the embodiment of the MAV system 100 illustrated in Figure 2 includes pad sensors 220, 222, 224 and 226, a processing module 204 and a communication module 206. The pad sensors 220, 222, 224 and 226 and the processing and communication modules 204 and 206 support the mission of the MAV by providing the MAV with information that is useful regarding intercepting intruders and the like. In particular, the processing module 204 is designed to process information received from the pad sensors 220, 222, 224 and 226. The communication module 206 is in communication with the control unit 105 on the MAV. In one embodiment the communication module 206 is incorporated in the pad controller 130.

In one embodiment, one or more of the pad sensors 220, 222, 224 and 226 are microphones. In this embodiment the pressing module 204 includes an acoustic signal processing subsystem. The acoustic signal processing subsystem is designed to detect (with the microphones), the presence of a vehicle near the pad 120, classify the vehicle according to the type and size as well as compute the bearing (i.e., the azimuth direction) to the vehicle. In one embodiment it can also determine the general direction of motion of the vehicle. The information determined by the processing module 204 is transmitted to the MAV via the communication module 206.

In mother embodiment, one or more of the pad sensors 220, 222, 224 and 226 are seismic motion sensors that are in contact with the ground. An example of this type of sensor is seismic motion sensor 226 of Figure 2. Transients generated by vehicles or humans walking near the launch pad 120 are measured by seismic motion sensor 226 and processed by the processing module 204. In one embodiment, at least one of me seismic motion sensors 226 (or geophones) is located remote to the launch pad 120 and is in communication with the processing module 204 via wire or wirelessly. The processing module 204 analyzes the geophone signals and determines if they are generated by a vehicle or a human. In embodiments of the present application it also classifies the vehicle according to type and size and determines the general direction of motion of the vehicle or human. This information is then sent to the MAV controller 105 of the MAV 102 which uses the information to direct its surveillance capabilities at the approaching object.

Other embodiments of the present invention use different types of pad sensors 220, 222, 224 and 226 such as infra-red motion detectors, magnetic sensors, radar, imaging cameras and the like. These sensors help the MAV device decide that an intruder is present and that it should go airborne, if it isn't already, to intercept it. Moreover, still other embodiments use two or more different types of pad sensors 220,222,224 and 226 that are located either on or off of the launch pad 120.

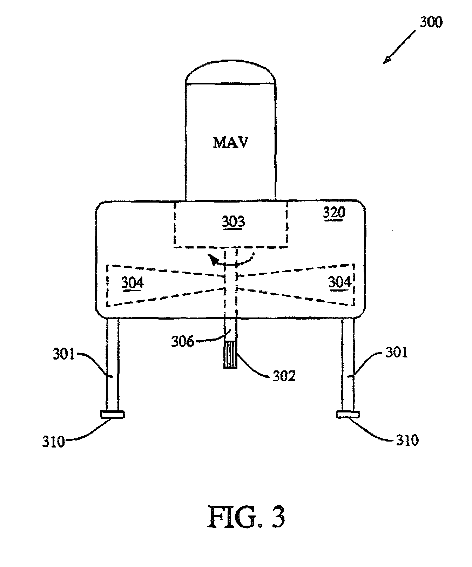

Referring to Figure 3, an example of a MAV 300 of one embodiment of the present invention is illustrated. Figure 3, illustrates the mechanism that provides lift in embodiments of the present invention. As illustrated, the MAV includes an engine 303 that is coupled to a drive shaft 306. The drive shaft 306 has a plurality of blades 304 coupled thereon. As the drive shaft 306 rotates in response to the engine 303, the blades 306 rotate within a duct 320 of the MAV 300 forcing air down through the duct 320 thereby providing lift for the vehicle. Also illustrated in Figure 3 are stabilizing legs 301 and feet 310. The drive shaft 306 of this embodiment is also an engine starting shaft 306. The engine starting shaft 306 terminates in a gear head 302. The gear head 302 in this embodiment has external gears or teeth that are used by a starter motor in a launch pad to provide rotational motion to the engine starting shaft 306 during an engine 303 starting maneuver,

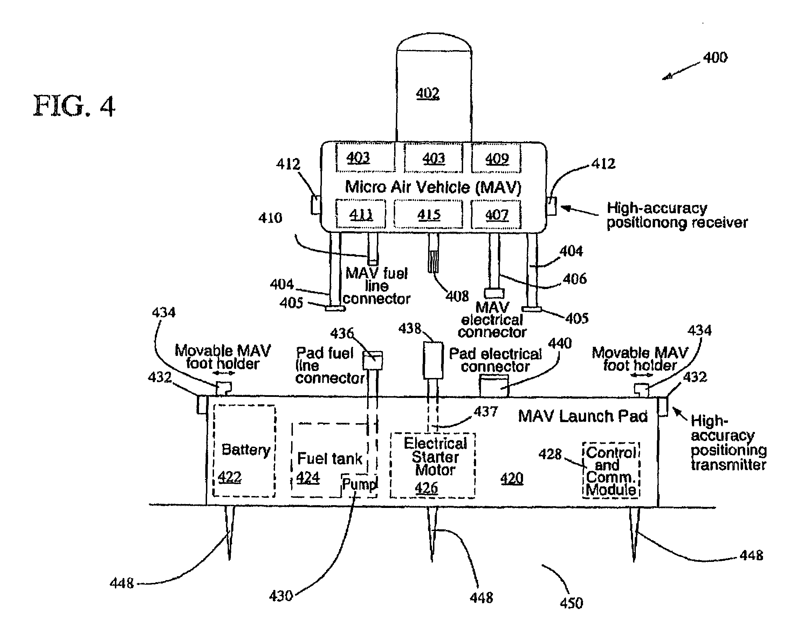

Another embodiment of a MAV system 400 of the present invention is illustrated in Figure 4. In this embodiment, the MAV system 400 is designed so that the MAV 402 can land back on the launch pad 420 after a surveillance mission. Moreover, in this embodiment, the launch pad 420 is designed to refuel and recharge the MAV 402 so that the MAV 402 can be re-launched over and over again without direct human intervention. The MAV 402 of this embodiment includes an engine starting shaft 408, three or more stabilizing legs 404 with feet 405, a MAV fuel line connector 410, a MAV electrical connector 406 and high-accuracy positioning receivers 412. The MAV fuel line connector 406 provides a path to a fuel storage compartment 411 in the MAV 402. The MAV electrical connector 406 provides an electrical path to a power storage device 407 that runs the surveillance equipment 403 on the MAV 402. The MAV 402 also includes a MAV controller 409 designed to control the functions of the MAV 402 including the surveillance equipment 403.

The launch pad 420 of the MAV system 400 includes a battery 422 to charge the power storage device 407 for the surveillance element 403 in the MAV 402, a fuel tack 424 and fuel pump 430 to store and pump fuel into the MAV 402 when it is on the launch pad 420. The launch pad 420 also includes a starter motor 426 to start an engine 115 of the MAV 402 when it is on the launch pad 420 and a control and communication module 428 (or launch pad controller 428). In this embodiment, the launch pad 420 further includes movable MAV foot holders 434. The movable foot holders 434 are designed to engage and hold the feet 405 of the stabilizing legs 404 when the MAV 402 is on the launch pad (420). Moreover, in one embodiment, at least one of the foot holders 434 is designed to move the MAV 402 to a desired location on the launch pad 420 following a landing that is not precisely at the desired location on the launch pad. The launch pad 420 further includes high accuracy positioning transmitters 435 that transmits positioning information to the positioning receivers 412 on the MAV 402 during landing procedures.

The launch pad 420 also includes a pad fuel connector 436. The pad fuel connector 436 is connected to the fuel pump 430. Moreover, the pad fuel line connector 436 is designed to connect a fuel storage compartment 411 on the MAV 402 to the fuel pump 430 of the launch pad 420, when the MAV 402 is on the launch pad 420. The launch pad 420 further includes a pad electrical connector 440. The pad electrical connector 440 is electrically coupled to the battery 422. The pad electrical connector 440 is further designed to be electrically coupled to the MAV electrical connector 406 of the MAV to provide an electrical connection when the MAV is on the launch pad 420 to charge the power storage device 407 of the surveillance equipment 403.

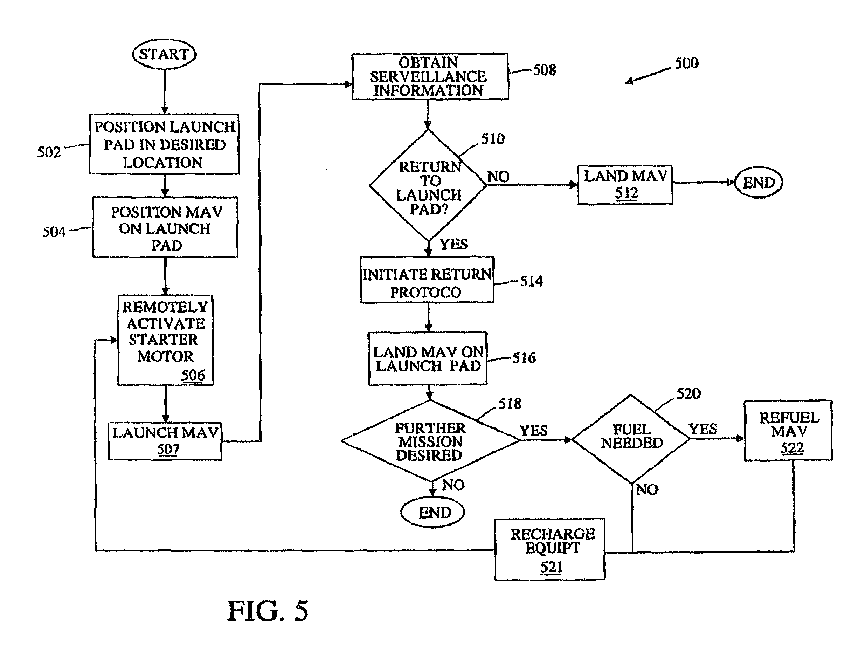

Referring to Figure 5, a flow diagram 500 of the use of a surveillance system of one embodiment of the present invention is illustrated. As illustrated, the process begins when a launch pad is positioned in a desired location (502). A MAV is then mounted on launch pad (504). When surveillance is desired, an engine in the MAV is started with a starter in the launch pad via a remote signal (506). Once the engine of the MAV starts, the MAV is launched from the launch pad (507). The MAV then provides its surveillance functions to gather surveillance information (508). Once the MAV has completed it surveillance functions, in this embodiment, it is then determined if the MAV is to return to the launch pad (510). If it is determined that the MAV should not return to the launch pad (510), the MAV flies to and lands at an alternative location, such a MAV depot (512). If it is determined that the MAV is to return to the launch pad (510), a return protocol is initiated (514). The return protocol provides communication between the MAV and the launch pad. The communications from the launch pad provides directions to the MAV.

In response to the return protocol, the MAV lands on the launch pad (516). It is then determined if further mission are desired (518), If no further missions are desired (518), the process ends. If further missions are desired (518), it is then determined if the MAV requires more fuel to complete the mission (520). If more fuel is required (520), fuel is transferred from the launch pad to the MAV (522). In one embodiment, the electrical surveillance equipment is recharged before the MAV is re-launched (521), The process will then start again when the starter motor is activated remotely (506).

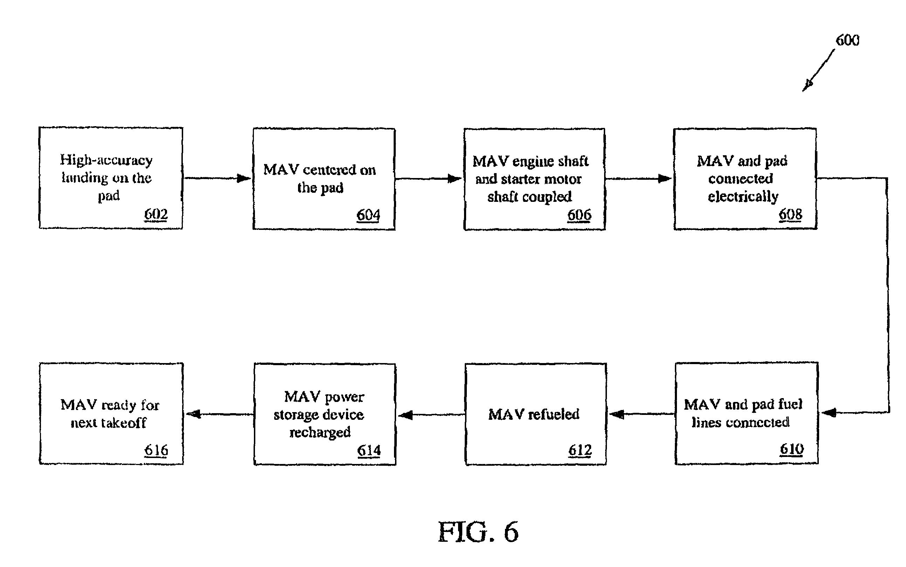

Referring to Figure 6, a block diagram 600 illustrating a process required for automatically landing a MAV on a landing pad with re-fueling and re-charging capabilities of one embodiment of the present invention is provided. Block diagram 600 is described in view of the MAV system illustrated in Figure 4. Embodiments of the present invention squire high-accuracy landing capacities (602). In one embodiment of the present invention, this is achieved by first using a global positioning system (GPS) or similar method to get the MAV within several of meters of the launch pad 420 and then using a high-accuracy positioning system to land the MAV 402 on the launch pad 420. The high-accuracy positioning system, in one embodiment, is a GPS-like scheme that works only near the launch pad 420. In further another embodiment, the high-accuracy positioning system utilizes a set of infra-red markers placed on the launch pad 420 for determining MAV location in relation to launch pad 420. Still other embodiments use other similar methods to operate the high-accuracy positioning system near the launch pad 420. As discussed above, once the MAV 402 is close enough to the launch pad 420 it will switch to the high accuracy positioning system to land on the pad 420. In particular, the high accuracy positioning system uses the transmitters 432 on the launch pad 420 and receivers 412 on the MAV 402 to work together to determine the location of the MAV 402 in relation to the launch pad 420. In one embodiment, the high accuracy positioning scheme provides an accuracy of a centimeter or better. In embodiments of the present invention, the MAV controller 409 will include control algorithms that enable it to use the high-accuracy measurements once it is close enough to the pad 420.

The MAV 402 is then centered on the launch pad 420 (block 604). The MAV 402 needs to be centered so that connections between the MAV 402 and the launch pad 420 match up. For example, the alignment of the engine shaft 408 with coupling 438, the MAV fuel line connector 4 10 with pad fuel line connector 436 and the MAV electrical connector 406 with pad electrical connector 440 is required. To ensure that the connections match up in a landing, embodiments of the present invention include movable MAV foot holders 434 as illustrated in Figure 4. The movable foot holders 434 are designed to move the MAV 402 into a proper position for alignment of the connections between the MAV and the launch pad. Accordingly, even if the high accuracy positioning scheme of block (602) does not provide accuracy within a millimeter, alignment can still be achieved with use of the movable MAV foot holders 434.

Once the connections between the MAV and the launch pad are aligned, a movable shaft coupling 438, connected to the starter motor shaft 437 is designed to move towards the MAV shaft 408 to complete a rotation connection (606). Moreover, a movable pad electrical connector 440 is designed to move up and connect the battery 422 and the control systems 428 on the launch pad 420 with the electrical and control systems on the MAV 402 (608), The fuel line connector 436 is also designed to rise and connect the fuel tank 424 in the pad 420 with the MAV fuel line connector 410 on the MAV (610).

The MAV controller 409 on the MAV working in cooperation with the pad controller 428 on the pad 420, refuel the MAV using the fuel pump 430 in the pad 420 (612). Moreover, once the electrical systems are connected, the battery 422 in the launch pad 420 starts charging one or more power storage devices 407 in the MAV 402 that operate the surveillance equipment in MAV 402 (614). As soon as the fuel has been transferred and the power storage devices 407 in the MAV 402 have been recharged, the MAV 402 is ready to be re-launched (616).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. An autonomous launch pad (120), the launch pad (12d) comprising:
a launching surface (142) adapted to support a vertical takeoff and landing air vehicle (102), wherein the air vehicle (102) can be commanded to launch from a location that is remote from the launch pad (120) via a remote launch signal command; **characterised in that**
a battery (126) is housed in the launch pad (120): and
a starter (128) is housed in the launch pad (120), the battery (126) being adapted to selectively provide power to operate the starter (128), the starter (128) being adapted to start an engine (103) of the air vehicle (102) upon the remote launch signal command that directs power from the battery (126) to be coupled to the starter (128).

2. The launch pad (120) of claim 1, further comprising:
a power shaft (124) extending from the starter (128); and
a coupler (136) coupled to an engaging end of the power shaft (124), the coupler (136) adapted to rotationally engage an engine starting shaft (106) of the air vehicle (102).

3. The launch pad (120) of claim 2, wherein the coupler (136) further comprises:
a collar (136) adapted to rotationally engage exterior gear teeth (302) on the engine starting shaft (306) of the air vehicle (102).

4. The launch pad (120) of claim 1, further comprising:
a plurality of foot holders (134), each foot holder (134) adapted to hold a foot (110) of the air vehicle (102) while the air vehicle (102) is resting on the launching surface (142) of the launch pad (120).

5. The launch pad (420) of claim 4, wherein at least one foot holder 434 is adapted to move the air vehicle (402) to a desired position on the launch pad (420).

6. The launch pad (120) of claim 1, further comprising at least one pad sensor (220,222, 224 and 226) adapted to detect surveillance information in the vicinity of the launch pad (120).

7. The launch pad (120) of claim 6, wherein the at least one pad sensor (220, 222, 224 or 226) is at least one of a microphone, a seismic motion sensors, an infra-zed motion detector, a magnetic sensor, radar and an imaging camera.

8. The launch pad of claim 6, wherein the launch pad 120 is adapted to send data detected by the at least one pad sensor (220, 222, 224 or 226) to the air vehicle (102).

9. The launch pad of claim 6, wherein at least one pad sensor (226) is adapted to be placed at a remote location to the launch pad 120.

10. The launch pad (420) of claim 1, further comprising:
a fuel tank (424); and
a fuel pump (430) adapted to pump fuel from the fuel tank (424) to the air vehicle (402) when the vehicle (402) is resting on the launching surface of the launch pad 420.

## Patentansprüche

1. Autonome Startrampe (120), die eine Startfläche (142) umfasst, die zur Abstützung eines Senkrechtstart- und Landeflugzeugs (102) ausgeführt ist, wobei das Flugzeug (102) über einen Fernstartsignalbefehl dahingehend angesteuert werden kann, von einem Ort zu starten, der von der Startrampe (120) entfernt ist, **dadurch gekennzeichnet, dass**
eine Batterie (126) in der Startrampe (120) untergebracht ist; und
ein Starter (128) in der Startrampe (120) untergebracht ist, wobei die Batterie (126) dazu ausgeführt ist, selektiv Energie bereitzustellen, um den Starter (128) zu betreiben, wobei der Starter (128) dazu ausgeführt ist, einen Motor (103) des Flugzeugs (102) auf den Fernstartsignalbefehl hin zu starten, der Energie von der Batterie (126) zur Kopplung an den Starter (128) leitet.

2. Startrampe (120) nach Anspruch 1, die weiterhin Folgendes umfasst:
eine Antriebswelle (124), die sich von dem Starter (128) erstreckt; und
einen Koppler (136), der mit einem Eingriffsende der Antriebswelle (124) verbunden ist, wobei der Koppler (136) dazu ausgeführt ist, eine Motorstartwelle (106) des Flugzeugs (102) in Dreheingriff zu nehmen.

3. Startrampe (120) nach Anspruch 2, wobei der Koppler (136) des Weiteren einen Bund (136) umfasst, der dazu ausgeführt ist, äußere Zahnradzähne (302) an der Motorstartwelle (306) des Flugzeugs (102) in Dreheingriff zu nehmen.

4. Startrampe (120) nach Anspruch 1, die weiterhin mehrere Fußhalter (134) umfasst, wobei jeder Fußhalter (134) dazu ausgeführt ist, einen Fuß (110) des Flugzeugs (102) zu halten, während sich das Flugzeug (102) auf der Startfläche (142) der Startrampe (120) stützt.

5. Startrampe (420) nach Anspruch 4, wobei mindestens ein Fußhalter (434) dazu ausgeführt ist, das Flugzeug (402) in eine gewünschte Position auf der Startrampe (420) zu bewegen.

6. Startrampe (120) nach Anspruch 1, weiterhin mit mindestens einem Rampensensor (220, 222, 224 und 226), der dazu ausgeführt ist, Überwachungsinformationen in der Nähe der Startrampe (120) zu erfassen.

7. Startrampe (120) nach Anspruch 6, wobei der mindestens eine Rampensensor (220, 222, 224 oder 226) ein Mikrofon und/oder ein Sensor für seismische Bewegungen und/oder ein Infrarot-Bewegungssensor und/oder ein Magnetsensor und/oder Radar und/oder eine Bildkamera ist.

8. Startrampe nach Anspruch 6, wobei die Startrampe (120) dazu ausgeführt ist, durch den mindestens einen Rampensensor (220, 222, 224 oder 226) erfasste Daten an das Flugzeug (102) zu senden.

9. Startrampe nach Anspruch 6, wobei mindestens ein Rampensensor (226) dazu ausgeführt ist, an einem von der Startrampe (120) abgesetzten Ort platziert zu werden.

10. Startrampe (420) nach Anspruch 1, die weiterhin Folgendes umfasst:
einen Brennstoffbehälter (424); und
eine Brennstoffpumpe (430), die dazu ausgeführt ist, Brennstoff aus dem Brennstoffbehälter (424) zum Flugzeug (402) zu pumpen, wenn sich das Flugzeug (402) auf der Startfläche der Startrampe (420) stützt.

## Revendications

1. Plateforme (120) de lancement autonome, la plateforme (120) de lancement comportant:
une surface (142) de lancement prévue pour supporter un véhicule aérien (102) à décollage et atterrissage vertical, le véhicule aérien (102) pouvant recevoir une commande de lancement à partir d'un emplacement distant de la plateforme (120) de lancement via une commande par signal de lancement télécommandé ;
**caractérisé**
**en ce qu'**une batterie (126) est logée dans la plateforme (120) de lancement ; et
**en ce qu'**un démarreur (128) est logé dans la plateforme (120) de lancement, la batterie (126) étant prévue pour fournir sélectivement de l'énergie afin d'actionner le démarreur (128), le démarreur (128) étant prévu pour démarrer un moteur (103) du véhicule aérien (102) suite à la commande par signal de lancement télécommandé qui dirige l'énergie de la batterie (126) afin de la coupler au démarreur (128).

2. Plateforme (120) de lancement selon la revendication 1, comportant en outre :
un arbre (124) de transmission s'étendant à partir du démarreur (128) ; et
un coupleur (136) couplé à une extrémité d'enclenchement de l'arbre (124) de transmission, le coupleur (136) étant prévu pour coopérer en rotation avec un arbre (106) de démarrage du moteur du véhicule aérien (102).

3. Plateforme (120) de lancement selon la revendication 2, le coupleur (136) comportant en outre:
un collier (136) prévu pour s'engrener en rotation avec une denture extérieure (302) sur l'arbre (306) de démarrage du moteur du véhicule aérien (102).

4. Plateforme (120) de lancement selon la revendication 1, comportant en outre :
une pluralité de supports (134) de pieds, chaque support (134) de pied étant prévu pour maintenir un pied (110) du véhicule aérien (102) tandis que le véhicule aérien (102) repose sur la surface (142) de lancement de la plateforme (120) de lancement.

5. Plateforme (420) de lancement selon la revendication 4, au moins un support (434) de pied étant prévu pour déplacer le véhicule aérien (402) jusqu'à une position souhaitée sur la plateforme (420) de lancement.

6. Plateforme (120) de lancement selon la revendication 1, comportant en outre au moins un capteur (220, 222, 224 et 226) de plateforme prévu pour détecter des informations de surveillance au voisinage de la plateforme (120) de lancement.

7. Plateforme (120) de lancement selon la revendication 6, le ou les capteurs (220, 222, 224 ou 226) de plateforme étant au moins un élément parmi un microphone, un capteur de mouvement sismique, un détecteur de mouvement à infrarouge, un capteur magnétique, un radar et une caméra d'imagerie.

8. Plateforme de lancement selon la revendication 6, la plateforme (120) de lancement étant prévue pour envoyer au véhicule aérien (102) les données détectées par le ou les capteurs (220, 222, 224 ou 226) de plateforme.

9. Plateforme de lancement selon la revendication 6, au moins un capteur (226) de plateforme étant prévu pour être placé à un emplacement distant de la plateforme (120) de lancement.

10. Plateforme (420) de lancement selon la revendication 1, comportant en outre:
un réservoir (424) de carburant ; et
une pompe (430) à carburant prévue pour pomper du carburant du réservoir (424) de carburant au véhicule aérien (402) lorsque le véhicule (402) repose sur la surface de lancement de la plateforme (420) de lancement.
